# EUROPÄISCHE PATENTSCHRIFT

(11) **EP 0 832 860 B1**
(45) Veröffentlichungstag und Bekanntmachung des Hinweises auf die Patenterteilung: **07.03.2001**
(21) Anmeldenummer: 97112185.0
(22) Anmeldetag: 16.07.1997
(51) Int. Cl.: C04B 11/05

(54) **Verfahren zur Herstellung von Schwerlöslichem Calciumsulfat-Anhydrit-II**
Process for the preparation of calcium sulfate anhydrite II of low solubility
Procédé pour la production d'anhydrite du type II de sulfate de calcium peu soluble

(30) Priorität: 25.09.1996 DE 19639448
(43) Veröffentlichungstag der Anmeldung: 01.04.1998
(73) Patentinhaber: SICOWA Verfahrenstechnik für Baustoffe GmbH & Co. KG, 50126 Bergheim (DE); SPM Gipssysteme GmbH & Co. KG, 06427 Nienburg (DE)
(72) Erfinder: Morgenroth, Henning, Dr., 52152 Simmerath (DE); Glückler, Martin, Dr., 52064 Aachen (DE); Hendan, Benedikt, Dr., 52070 Aachen (DE); Koslowski, Thomas, Dr., 52072 Aachen (DE)
(74) Vertreter: Enders, Monika Ute

(56) Entgegenhaltungen:
- EP-A- 0 074 887
- EP-A- 0 503 450
- EP-A- 0 513 779
- DE-A- 2 064 210
- DE-A- 3 827 612
- FR-A- 2 235 891
- FR-A- 2 453 117
- DATABASE WPI Section Ch, Week 8616 Derwent Publications Ltd., London, GB; Class L02, AN 86-105804 XP002050473 & SU 1 183 475 A (BUILDING MATL CONS) , 7.Oktober 1985

## Beschreibung

Die Erfindung betrifft ein Verfahren zur Herstellung von schwerlöslichem Calciumsulfat-Anhydrit-II nach dem Oberbegriff des Anspruchs 1.

Schwerlösliches Calciumsulfat-Anhydrit-II ist eine Gipsphase, die durch Calcinieren von Calciumsulfat-Dihydrat unter technischen Bedingungen im Temperaturbereich von über 250 entsteht.

Als Rohstoff für die Herstellung von Calciumsulfat-Anhydrit-II wurde in der Vergangenheit überwiegend körniger Naturgips verwendet. Gegenwärtig kommen verstärkt feinteilige Rohstoffe wie beispielsweise REA- oder Chemiegips zum Einsatz, deren Anteil in Zukunft deutlich steigen wird.

Zur Durchführung der Calcinierung sind beispielsweise folgende Aggregate in Gebrauch:
Drehrohrofen, direkt und indirekt beheizt,
Mahl-Brenn-Calcinatoren,
Trägergas-Calcinatoren.

Die Calcinierprodukte sind trotz hoher Temperaturen und langer Verweilzeiten während des Calcinierprozesses allgemein Mehrphasengemische, die in Abhängigkeit vom jeweiligen Prozeß neben schwerlöslichem Calciumsulfat-Anhydrit-II mehr oder weniger hohe Anteile an unlöslichem Calciumsulfat-Anhydrit-II sowie an hochreaktivem, hygroskopischem, an Luft zu Calciumsulfat-β-Halbhydrat reagierenden Calciumsulfat-Anhydrit-III enthalten. Letzterer wird auch nicht durch eine verlängerte Calcinierdauer oder Erhöhung der Calciniertemperatur beseitigt.

Für die Herstellung moderner Baustoffe wie beispielsweise Putzgips ist es jedoch notwendig, Calcinierprodukte als Basisgipse zu erzeugen, die sich durch hohe Phasenreinheit, Gleichmäßigkeit und Stabilität auszeichnen.

Aus DE-A-2 064 210 ist es bekannt, feinteiliges Calciumsulfat-Dihydrat in trockenem Zustand in einem Calcinieraggregat durch entsprechende Wärmeeinwirkung zu entwässern, wobei in einer ersten Stufe das feinteilige Calciumsulfat-Dihydrat allmählich auf eine Temperatur von mehr als 250 °C erhitzt und danach in einer zweiten Stufe auf dieser Temperatur im Bereich von 250 bis 450°C unter Wasserdampfatmosphäre mit einem Wasserdampfpartialdruck zwischen 1,14 und 5,1 at gehalten wird. Hierbei wird zwar calcinierter Gips erhalten, jedoch haben entsprechende Versuche ergeben, daß dieser - im Gegensatz zu dem in dieser Schrift vermuteten Anhydrit-II - keineswegs praktisch phasenrein ist, sondern etwa 20 bis 25 Gew.-% Anhydrit-III enthält, wobei dieser Prozentsatz im wesentlichen unabhängig von der Haltezeit ist. Durch das anschließende Zerkleinern des erhaltenen Materials ergibt sich lediglich eine Erhöhung der Oberfläche, was sich entsprechend auf die Reaktivität des Gipses auswirkt.

Aus EP-A-0 513 779 ist es bekannt, Anhydrit-Fließestrichgips aus REA-Gips herzustellen, wobei das Ausgangsmaterial nach Trocknung einer zweistufigen Vorwärmung unterworfen und dann in einer Trägergas-Calcinierzone auf eine Calciniertemperatur von 780 bis 900°C gebracht wird, wonach das calcinierte Material nach Kühlung vermahlen wird. Hierbei ergibt sich aufgrund der hohen Calciniertemperatur praktisch nur unlösliches und kein schwerlösliches Anhydrit-II, der zur Anpassung des Wasser-Gips-Wertes an die Ansprüche von Fließestrichgips gemahlen wird.

Aufgabe der Erfindung ist es, ein Verfahren nach dem Oberbegriff des Anspruchs 1 zu schaffen, das es ermöglicht, praktisch Anhydrit-III-freies, schwerlösliches Calciumsulfat-Anhydrit-II zu erhalten.

Diese Aufgabe wird entsprechend dem kennzeichnenden Teil des Anspruchs 1 gelöst.

Hierbei wird feinteiliges Calciumsulfat-Dihydrat auf eine Temperatur etwa von 580 bis 650°C erhitzt und auf dieser Temperatur unter Wasserdampfatmosphäre mit einem Wasserdampfpartialdruck etwa ≤ 0,2 bar während einer ausreichenden Haltezeit derart gehalten, daß ein Phasengemisch aus überwiegend schwerlöslichem Calciumsulfat-Anhydrit-II sowie einem geringeren Anteil an unlöslichem Calciumsulfat-Anhydrit-II und Calciumsulfat-Anhydrit-III gebildet wird, wobei das erhaltene Phasengemisch auf eine spezifische Oberfläche nach Blaine etwa von > 4000 cm²/g aufgemahlen wird.

Es wurde festgestellt, daß einerseits selbst hohe Temperaturen keine Behinderung für die Bildung von Calciumsulfat-Anhydrit-III darstellen, andererseits aber ein niedriger Wasserdampfpartialdruck ≤ 0,2 bar geeignet ist, um gebildetes Calciumsulfat-Anhydrit-III abzubauen, so daß im Temperaturbereich von 580 bis 650°C bei etwa 12 bis 30 min Haltezeit das erhaltene Phasengemisch einen Anteil an Calciumsulfat-Anhydrit-III aufweist, der unter 5 Gew.-% liegt und damit praktisch frei von Calciumsulfat-Anhydrit-III ist. Bei diesen Behandlungstemperaturen bildet sich jedoch auch in nicht unwesentlichem Umfang unlösliches Calciumsulfat-Anhydrit-II. Jedoch wurde gefunden, daß sich dieses wesentlich an der Oberfläche der Körner befindet. Durch ein Mahlen, das zweckmäßigerweise nach einem Kühlen des erhaltenen Materials vorgenommen wird, auf eine spezifische Oberfläche nach Blaine von > 4000 cm²/g, werden oberflächlich zu unlöslichem Calciumsulfat-Anhydrit-II calcinierte Gipskörner aufgebrochen und deren aus schwerlöslichem Calciumsulfat-Anhydrit-II bestehenden Kerne freigelegt, wodurch der Kornanteil aus schwerlöslichem Calciumsulfat-Anhydrit-II entsprechend erhöht und nach dem Mahlen etwa bei etwa 80 Gew.-% (bei einer Calciumsulfat-Dihydrat-Reinheit von etwa 97%) liegt. - Ein Mahlen auf eine spez. Oberfläche nach Blaine > 6000 cm²/g ist im allgemeinen nicht wirtschaftlich.

Das Verfahren läßt sich zwar einstufig ausführen, jedoch wird eine zweistufige Ausführung wegen der dabei erzielten erheblichen Energieeinsparung bevorzugt. Hierbei wird in einer ersten Stufe das feinteilige Calciumsulfat-Dihydrat in einem Calcinieraggregat zunächst bei 130 bis 150°C zu Halbhydrat vorcalciniert. Dies kann während 10 bis 120 min, insbesondere 30 bis 60 min, durchgeführt wird. Hierdurch ist zum eigentlichen Calcinieren im Temperaturbereich von 580 bis 650°C nur noch eine geringere Masse sowie einen wesentlich geringeren Anteil an Brüden auf die Calciniertemperatur zu bringen und außerdem auch nur noch ein Drittel des Wassers auszutreiben. Somit ergibt sich eine deutliche Energieeinsparung in der Größenordnung von etwa 25% gegenüber dem einstufigen Verfahren.

Als Ausgangsmaterial eignet sich insbesondere ein Gips mit einer Teilchengröße < 100 µm, vorzugsweise synthetischer Gips wie REA-Gips, der bereits mit einer derartigen Korngröße anfällt. Der Feuchtigkeitsgehalt des als Rohmaterial verwendeten Calciumsulfat-Dihydrats ist dabei zweckmäßigerweise < 0,2 Gew.-%. Synthetische Gipse fallen feucht an und sind daher vor dem Calcinieren auf < 0,2 Gew.-% Feuchte zu trocknen.

Ein Kühlen des calciniertes Materials vor dem Mahlen kann mittels Schnecken, Trommeln, Drehrohr- oder Wirbelbettaggregaten und dergleichen vorgenommen werden.

Dieses Verfahren läßt sich großtechnisch realisieren, so daß sich auf diese Weise große Mengen an praktisch Anhydrit-III-freiem, schwerlöslichem Calciumsulfat-Anhydrit-II herstellen lassen, bei dem > 98 Masse-% des im Rohstoff enthaltenen Calciumsulfat-Dihydrats umgewandelt sind.

Das Verfahren kann beispielsweise in Wirbel- oder Fließbettaggregaten oder in Drehrohraggregaten durchgeführt werden. Dabei kann das Heizmedium im Gleich-, Quer- oder Gegenstrom zum Materialstrom geführt werden. Durch entsprechende apparative Gestaltung der Aggregate wie z.B. Wehre, Blenden, Wendelschnecken od.dgl. ist eine entsprechende Verweilzeit des Materials bei der erforderlichen Temperatur in den vorgesehenen Intervallen einstellbar.

Bei zweistufiger Verfahrensweise kann zunächst die erste Stufe des Verfahren in einem Aggregat durchgeführt werden. Durch entsprechende Ausbildung unterschiedlicher Temperaturzonen in einem solchen Aggregat wie einem Drehrohrofen kann sich in diesem auch die zweite Stufe des Verfahrens anschließen. Gegebenenfalls kann eine Schleuse vorgesehen sein, die zur Aufteilung des Aggregats in zwei Bereiche für die erste und die zweite Behandlungsstufe dient. Es ist jedoch vorzuziehen, die zweite Stufe in einem anderen Aggregat durchzuführen, wobei dies insbesondere kontinuierlich in einem weiteren Aggregat wie einem Drehrohrofen geschehen kann, in denen nur die entsprechende Temperatur gehalten und eine definierte Wasserdampfatmosphäre aufrechterhalten wird.

Die erste Stufe ist einerseits mit starker Wasserdampfentwicklung und andererseits mit starker Staubaufwirbelung verbunden, so daß die aus der ersten Stufe des Verfahrens abgeführten Wasserdampfbrüden stark staubbeladen sind. Der Staub kann beispielsweise über Zyklone abgeschieden und dem Material der zweiten Stufe zugeführt werden.

Um ein definiertes Temperatur-Verweilzeit-Spektrum des Materials zu erhalten, ist es zweckmäßig, das Material mittels einer Schnecke od.dgl. zu fördern.

### Beispiel

Als Ausgangsmaterial wird feinteiliges Calciumsulfat-Dihydrat aus der Rauchgasentschwefelung (REA-Gips) eingesetzt, das auf < 0,1 Gew.-% Feuchte getrocknet wurde und eine Reinheit von 98% aufwies.

Eine erste Calcinierstufe (Vorcalcinierung) wurde in einem Drehrohrofen während 40 min bei 130°C und nahezu 0,2 bar Wasserdampfpartialdruck durchgeführt.

Danach folgte eine zweite Calcinierstufe im Drehrohrofen mit einer Haltezeit von 15 min bei 600°C und einem Wasserdampfpartialdruck von 0,2 bar.

Das so calcinierte Produkt zeigte bezogen auf den 98-prozentigen Dihydratgehalt im REA-Gips folgende Phasenzusammensetzung:
Calciumsulfat-Anhydrit-IIs: 91 Gew.-%
Calciumsulfat-Anhydrit-IIu: 9 Gew.-%
Claciumsulfat-Anhydit-III: nicht nachweisbar

## Patentansprüche

1. Verfahren zur Herstellung von schwerlöslichem Calciumsulfat-Anhydrit-II, bei dem feinteiliges Calciumsulfat-Dihydrat in trockenem Zustand in einem Calcinieraggregat durch entsprechende Wärmeeinwirkung entwässert, auf der Calciniertemperatur unter Wasserdampfatmosphäre gehalten und das calcinierte Material aufgemahlen wird, dadurch **gekennzeichnet,** daß das feinteilige Calciumsulfat-Dihydrat auf eine Temperatur von 580 bis 650°C erhitzt und auf dieser Temperatur unter Wasserdampfatmosphäre mit einem Wasserdampfpartialdruck ≤ 0,2 bar während einer ausreichenden Haltezeit derart gehalten wird, daß ein Phasengemisch aus überwiegend schwerlöslichem Calciumsulfat-Anhydrit-II sowie einem geringeren Anteil an unlöslichem Calciumsulfat-Anhydrit-II und Calciumsulfat-Anhydrit-III gebildet wird, wobei das erhaltene Phasengemisch auf eine spezifische Oberfläche nach Blaine von > 4000 cm²/g aufgemahlen wird.

2. Verfahren nach Anspruch 1, dadurch gekennzeichnet, daß eine Haltezeit von 12 bis 30, insbesondere 14 bis 18 min verwendet wird.

3. Verfahren nach Anspruch 1 oder 2, dadurch gekennzeichnet, daß das erhaltene Phasengemisch auf eine spezifische Oberfläche nach Blaine zwischen 4000 und 6000 cm²/g aufgemahlen wird.

4. Verfahren nach einem der Ansprüche 1 bis 3, dadurch gekennzeichnet, daß Calciumsulfat-Dihydrat mit einer Korngröße unter 100 µm verwendet wird.

5. Verfahren nach Anspruch 4, dadurch gekennzeichnet, daß als Calciumsulfat-Dihydrat REA-Gips verwendet wird.

6. Verfahren nach einem der Ansprüche 1 bis 5, dadurch gekennzeichnet, daß das feinteilige Calciumsulfat-Dihydrat zunächst in einer ersten Stufe bei 130 bis 150°C vorcalciniert wird.

7. Verfahren nach Anspruch 6, dadurch gekennzeichnet, daß das Vorcalcinieren während 10 bis 120 min, insbesondere 30 bis 60 min, durchgeführt wird.

8. Verfahren nach Anspruch 6 oder 7, dadurch gekennzeichnet, daß das feinteilige Calciumsulfat-Dihydrat kontinuierlich in einen Drehrohr-, Wirbel- oder Fließbettaggregat aufgegeben und vorcalciniert wird.

9. Verfahren nach Anspruch 8, dadurch gekennzeichnet, daß das Aggregat im Gleich- oder Querstrom zum hindurchgeführten Material beheizt wird.

10. Verfahren nach einem der Ansprüche 1 bis 9, dadurch gekennzeichnet, daß das Calcinieren in einem Drehrohr-, Wirbel- oder Fließbettaggregat durchgeführt wird.

11. Verfahren nach einem der Ansprüche 1 bis 10, dadurch gekennzeichnet, daß Staub, der beim Vorcalcinieren entsteht, nach Abscheidung aus beim Vorcalcinieren entstandenen Wasserdampfbrüden dem zu calcinierenden Material zugesetzt wird.

## Claims

1. Method of manufacturing calcium sulphate-anhydrite-II, which is difficult to dissolve, in which fine grained calcium sulphate dihydrate in the dry state is dehydrated by the appropriate action of heat in a calcining installation and is held at the calcining temperature under an atmosphere of water vapour and the calcined material is ground, characterised in that the fine grained calcium sulphate dihydrate is heated to a temperature of 580 to 650°C and is held at this temperature under a water vapour atmosphere with a water vapour partial pressure ≤ 0.2 bar for a sufficient holding time that a phase mixture is formed of predominantly calcium sulphate-anhydrite-II, which is difficult to dissolve, and a small proportion of insoluble calcium sulphate-anhydrite-II and calcium sulphate-anhydrite-III, whereby the phase mixture which is obtained is ground to a specific surface area in accordance with Blaine of > 4000 cm²/g.

2. Method as claimed in Claim 1, characterised in that a holding time of 12 to 30, particularly 14 to 18 min, is used.

3. Method as claimed in Claim 1 or 2, characterised in that the phase mixture which is obtained is ground to a specific surface area in accordance with Blaine of between 4000 and 6000 cm²/g.

4. Method as claimed in one of Claims 1 to 3, characterised in that calcium sulphate dihydrate with a grain size less than 100 µm is used.

5. Method as claimed in Claim 4, characterised in that flue gas desulphurisation gpysum is used as the calcium sulphate dihyrate.

6. Method as claimed in one of Claims 1 to 5, characterised in that the fine grained calcium dihydrate is initially precalcined at 130 to 150°C in a first step.

7. Method as claimed in Claim 6, characterised in that the precalcining process is performed for 10 to 120 min, particularly 30 to 60 min.

8. Method as claimed in Claim 6 or 7, characterised in that the fine grained calcium sulphate dihydrate is continuously supplied to an installation of rotary tubular, eddy or fluidised bed type and precalcined.

9. Method as claimed in Claim 8, characterised in that the installation is heated in a flow in the same direction as or transversely to the material passing through it.

10. Method as claimed in one of Claims 1 to 9, characterised in that the calcining process is performed in an installation of rotary tubular, eddy or fluidised bed type.

11. Method as claimed in one of Claims 1 to 10, characterised in that the dust. which is produced in the precalcining process. is added, after removal from the water vapours produced in the precalcining process, to the material to be calcined.

## Revendications

1. Procédé pour préparer un sulfate de calcium peu soluble sous la forme anhydride-II dans lequel, partant d'un sulfate de calcium dihydraté à l'état de fines particules, à l'état sec, on le déshydrate dans un appareil de calcination par apport de chaleur approprié, on maintient à la température de calcination en atmosphère de vapeur d'eau et on broie la matière calcinée, caractérisé par le fait que l'on chauffe le sulfate de calcium dihydraté en fines particules à une température de 580 à 650°C et on le maintient à cette température en atmosphère de vapeur d'eau sous une pression partielle de vapeur d'eau inférieure ou égale à 0,2 bar pendant une durée suffisante pour qu'il se forme un mélange de phases consistant principalement en sulfate de calcium peu soluble à l'état d'anhydride-II avec une petite proportion de sulfate de calcium peu soluble à l'état d'anhydride-II et de sulfate de calcium à l'état d'anhydride-III, puis on broie le mélange de phases en question jusqu'à une surface spécifique selon Blaine supérieure à 4000 cm²/g.

2. Procédé selon la revendication 1, caractérisé par le fait que l'on maintient dans les conditions spécifiées pendant 12 à 30, plus spécialement 14 à 18 minutes.

3. Procédé selon la revendication 1 ou 2, caractérisé par le fait que l'on broie le mélange de phases obtenu jusqu'à une surface spécifique selon Blaine de 4000 à 6000 cm²/g.

4. Procédé selon une des revendications 1 à 3, caractérisé par le fait que l'on utilise un sulfate de calcium dihydraté à une dimension de grain inférieure à 100 µm.

5. Procédé selon la revendication 4, caractérisé par le fait que l'on utilise, en tant que sulfate de calcium dihydraté, du gypse obtenu par sulfuration dans des gaz de fumée.

6. Procédé selon une des revendications 1 à 5, caractérisé par le fait que l'on soumet d'abord le sulfate de calcium dihydraté à l'état de fines particules, dans un premier stade, à une calcination préalable à des températures de 130 à 150°C.

7. Procédé selon la revendication 6, caractérisé par le fait que la calcination préalable est poursuivie pendant 10 à 120 minutes, plus spécialement 30 à 60 minutes.

8. Procédé selon la revendication 6 ou 7, caractérisé par le fait que le sulfate de calcium dihydraté en fines particules est envoyé et soumis à calcination préalable en continu, dans un appareil à tube rotatif, un appareil à lit tourbillonnaire ou un appareil à lit fluidisé.

9. Procédé selon la revendication 8, caractérisé par le fait que l'appareil est chauffé en courant parallèle ou en courant transversal par rapport à la matière qui passe.

10. Procédé selon une des revendications 1 à 9, caractérisé par le fait que la calcination est réalisée dans un appareil à tube rotatif, à lit tourbillonnaire ou à lit fluidisé.

11. Procédé selon une des revendications 1 à 10, caractérisé par le fait que la poussière formée à la calcination préalable, après avoir été séparée de la vapeur d'eau formée dans cette calcination préalable, est recyclée dans la matière à calciner.
